# EUROPÄISCHE PATENTSCHRIFT

(11) **EP 0 775 600 B1**
(45) Veröffentlichungstag und Bekanntmachung des Hinweises auf die Patenterteilung: **29.09.1999**
(21) Anmeldenummer: 96890174.4
(22) Anmeldetag: 22.11.1996
(51) Int. Cl.: B60C 11/03, B60C 11/04, B60C 11/12

(54) **Fahrzeugluftreifen**
Vehicle tyre
Bandage pneumatique pour véhicule

(30) Priorität: 24.11.1995 AT 192595
(43) Veröffentlichungstag der Anmeldung: 28.05.1997
(73) Patentinhaber: Semperit Reifen Aktiengesellschaft, A-2514 Traiskirchen (AT)
(72) Erfinder: Pölzlbauer, Thomas, 7000 Eisenstadt (AT)
(74) Vertreter: Vinazzer, Edith, Dipl.-Ing.

(56) Entgegenhaltungen:
- EP-A- 0 485 883
- EP-A- 0 609 195
- EP-A- 0 729 854
- US-A- 4 962 801
- US-A- 5 105 864
- PATENT ABSTRACTS OF JAPAN vol. 96, no. 001 & JP 08 025917 A (BRIDGESTONE CORP), 30.Januar 1996,

## Beschreibung

Die vorliegende Erfindung betrifft einen Fahrzeugluftreifen, insbesondere für den Einsatz unter winterlichen Fahrbedingungen, mit einem Laufstreifenprofil, welches zumindest eine breite, zentrale, in Umfangsrichtung umlaufende Umfangsnut und weitere Umfangsnuten und Quernuten besitzt, wobei in jeder Laufstreifenhälfte eine der zentralen Umfangsnut benachbarte mittlere Blockreihe, eine weitere mittlere Blockreihe und eine Schulterblockreihe angeordnet sind, deren Blöcke jeweils mit einer Vielzahl von Lamellenfeineinschnitten versehen sind, wobei durch den Verlauf der Quernuten in den beiden Laufstreifenhälften das Laufstreifenprofil gepfeilt und laufrichtungsgebunden gestaltet ist.

Für den Einsatz unter winterlichen Fahrbedingungen vorgesehene Fahrzeugluftreifen mit laufrichtungsgebundenen Laufstreifenprofilen sind in unterschiedlichen Ausführungsvarianten bekannt. So wurde beispielsweise ein Reifen vorgeschlagen, bei dem sämtliche Umfangsnuten als im wesentlichen in Umfangsrichtung verlaufende Nuten ausgebildet sind. Sowohl die Blöcke der der zentralen Umfangsnut benachbarten Blockreihen als auch die in Querrichtung jeweils benachbarten Blöcke der beiden mittleren Blockreihen sind dabei durch eine Kombination aus einem breiten und einem schmalen Nutabschnitt voneinander getrennt, wobei die schmalen Nutabschnitte jeweils eine geringere Tiefe besitzen als die breiten Nutabschnitte. Dieser Reifen ist Gegenstand der ätteren europäischen Patentanmeldung Nr. 0 729 854 (veröffentlicht am 4.9.96) und entspricht dem Oberbegriff des Anspruchs 1.

Die Erfindung hat sich nun die Aufgabe gestellt, diesen gattungsgemäßen Reifen bezüglich des Aquaplaningverhaltens und des Schneegriffes noch zu verbessern, wobei andere Profileigenschaften, wie beispielsweise das Brems-und Traktionsverhalten auf Schnee und Eis, sowie das Fahrverhalten, insbesondere das Ansprechverhalten auf Lenkkräfte, zumindest gleich gut erhalten bleiben sollen.

Gelöst wird die gestellte Aufgabe erfindungsgemäß dadurch, daß sich die Umfangsnuten aus Umfangsnutteilen zusammensetzen, die jeweils unter einem spitzen Winkel von 5 bis 25°, insbesondere von 10 bis 20°, zur Umfangsrichtung geneigt verlaufen, wobei die Umfangsnutteile in der einen Laufstreifenhälfte gegenüber jenen in der anderen Laufstreifenhälfte gegensinnig geneigt sind, und wobei die Umfangsnutteile zwischen den Blöcken der mittleren Blockreihen schmäler ausgeführt sind als die Umfangsnutteile zwischen den Schulterblockreihen und den diesen benachbarten mittleren Blockreihen, und über ihren Verlauf zumindest im wesentlichen konstante Breite besitzen sowie über einen Teil ihrer Erstreckung eine geringere Tiefe aufweisen als die volle Dessintiefe.

Die Schrägstellung der Umfangsnuten bzw. Umfangsnutteile bewirkt gegenüber in Umfangsrichtung verlaufenden Umfangsnuten eine deutliche Verbesserung im Schneegriff. Die bereichsweise geringere Tiefe der Umfangsnutteile, die die beiden mittleren Blockreihen voneinander trennen, erhöht im Profilmittelbereich die Profilsteifigkeit, was eine sehr gutes Fahrverhalten, insbesondere ein direktes Ansprechen auf Lenkkräfte gewährleistet. Gleichzeitig wird das Aquaplaningverhalten durch die konstante Breite der Umfangsnuten sehr günstig beeinflußt, da Verwirbelungen weniger auftreten als bei Ausführungsformen, wo die Breite von Umfangsnuten variiert wird.

Gemäß einer bevorzugten Ausführungsform der Erfindung setzen sich die die Blöcke der beiden mittleren Blockreihen voneinander trennenden Umfangsnutteile aus drei Abschnitten zusammen, die vorzugsweise jeweils über ein Drittel der Länge der Umfangsnutteile verlaufen, wobei die den Quernuten benachbarten ersten und dritten Abschnitte eine geringere Tiefe besitzen als der mittlere Abschnitt. Es hat sich für das Fahrverhalten als günstiger herausgestellt, wenn, wie es durch diese Ausgestaltung der Fall ist, die Stabilität an den äußeren Randbereichen der Blöcke erhöht wird.

Um Profilstabilität und Wasserableitvermögen dieser Umfangsnutteile aufeinander abzustimmen ist es von Vorteil, wenn diese Umfangsnutteile in ihren seichteren Abschnitten eine Tiefe von 25 bis 60 %, insbesondere ca. 50 %, der Dessintiefe besitzen.

Auf die Profilstabilität im Laufstreifenmittelbereich wirkt es sich ferner günstig aus, wenn die Blöcke der der zentralen Umfangsnut benachbarten Blockreihen voneinander durch Einschnitte, die eine Breite von 0,5 bis 1 mm und zumindest über einen Teil ihrer Länge eine geringere Tiefe als die Dessintiefe besitzen, getrennt sind. Auch bei diesen Einschnitten ist es von Vorteil, wenn die Tiefe der Einschnitte zwischen 30 und 70 %, insbesondere etwa 50 %, der Dessintiefe beträgt. Nach einer weiteren bevorzugten Ausgestaltung der Erfindung sind die von Umfangsnuten begrenzten Blockkanten sägezahnartig gezackt ausgebildet. Diese Ausgestaltung begünstigt das Bremsverhalten auf winterlichen Fahrbahnen, insbesondere auf Schnee oder Eis, und auch Naß- und Schneegriff. Ein gleichmäßiger Abrieb des Laufstreifenprofiles wird dadurch begünstigt, wenn die Lamellenfeineinschnitte in den Blöcken derart verlaufen, daß sie an den einspringenden Ecken der sägezahnartig ausgestalteten Blockkanten in die Umfangsnuten münden.

Auch auf das Seitenführungsverhalten des Reifens wirkt es sich vorteilhaft aus, wenn die Lamellenfeineinschnitte in den Blöcken der der zentralen Umfangsnut benachbarten Blockreihen eine Erstreckungsrichtung besitzen, die zumindest im wesentlichen der Profilquerrichtung entspricht, bzw. unter einem kleinen Winkel von bis zu 10° von dieser abweicht.

Für das Griffverhalten des Reifens ist es ferner von Vorteil, wenn sämtliche Feineinschnitte eine Zick-zack- oder Wellenform besitzen.

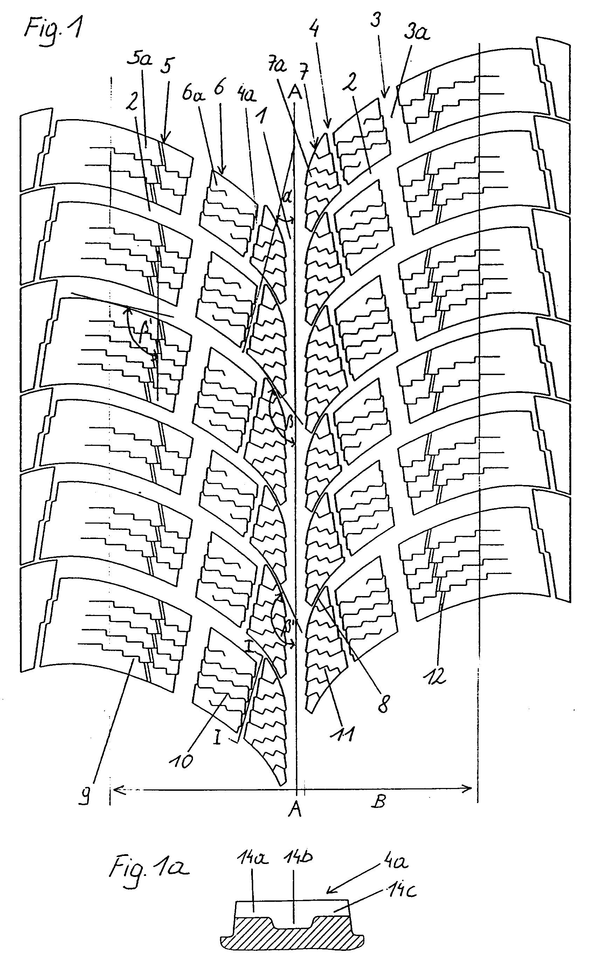

Weitere Merkmale, Vorteile und Einzelheiten der Erfindung werden nun anhand der Zeichnung, die ein Ausführungsbeispiel darstellt, näher beschrieben. Dabei zeigt Fig. 1 eine Draufsicht auf eine Teilabwicklung eines gemäß der Erfindung gestalteten Laufstreifenprofiles und Fig. 1a einen Schnitt entlang der Linie I-I der Fig. 1.

Das dargestellte Laufstreifenprofil ist für einen PKW-Winterreifen vorgesehen. In der nachfolgenden Beschreibung wird das Profil über seine Breite B, welche der Breite der Bodenaufstandsfläche des Reifens gemäß E.T.R.T.O.-Standards entspricht, betrachtet.

Bei dem dargestellten Laufstreifenprofil handelt es sich um ein laufrichtungsgebunden gestaltetes Profil. Das Laufstreifenprofil besitzt eine entlang der Äquatorlinie A-A verlaufende, in Umfangsrichtung im wesentlichen gerade umlaufende, zentrale Umfangsnut 1 und breite Quernuten 2, die jeweils vom Mittelbereich des Laufstreifens leicht bogenförmig gekrümmt zu den Laufstreifenrändern und über diese hinaus verlaufen. Der Winkel β, den Tangenten an die Quernuten 2 an den laufstreifeninnenseitigen Enden mit der Äquatorlinie A-A einschließen ist größer als der Winkel β', den Tangenten am Laufstreifenrand mit der Äquatorlinie A-A einschließen. Durch den Verlauf der Quernuten 2 entsteht ein im allgemeinen als gepfeilt bezeichnetes Profil. Der Reifen wird derart am Fahrzeug montiert, daß beim Abrollen die laufstreifeninnenseitig gelegenen Endbereiche der Quernuten 2 zuerst in die Kontaktfläche mit dem Untergrund eintreten.

Durch weitere Umfangsnuten 3, 4 erhält das Laufstreifenprofil eine Blockstruktur, wobei in jeder Laufstreifenhälfte jeweils eine Schulterblockreihe 5 und je zwei Mittelblockreihen 6, 7 gebildet werden.

Jede Umfangsnut 3, 4 setzt sich aus Umfangsnutteilen 3a, 4a zusammen, die die in Profilquerrichtung benachbarten Blöcke 5a, 6a, 7a der Blockreihen 5, 6, 7 voneinander trennen, wobei sowohl die Umfangsnutteile 3a als auch die Umfangsnutteile 4a gegenüber der Äquatorlinie A-A unter einem spitzen Winkel α, welcher im dargestellten Ausführungsbeispiel 15° beträgt, verlaufen. Die Umfangsnutteile 3a, 4a in der einen Laufstreifenhälfte sind zu jenen in der anderen Laufstreifenhälfte angeordneten gegensinnig geneigt. Diese Schrägstellung der Umfangsnutteile 3a, 4a zeigt positive Auswirkungen im Schneegriff. Der Winkel α kann dabei in einem Bereich von 5 bis 25°, insbesondere 10 bis 20°, gewählt werden. Durch die laufrichtungsgebundene, gepfeilte Profilgestaltung liegen die Winkel α, β, β' in den beiden Laufstreifenhälften bezüglich der Umfangsrichtung (Äquatorlinie A-A) spiegelbildlich vor. Durch die geschilderte und dargestellte Neigung der Umfangsnutteile 3a, 4a sind diese für in Umfangsrichtung benachbarte Blöcke 5a, 6a, 7a betrachtet in Reifenquerrichtung derart gegeneinander versetzt, daß keine fluchtende Anordnung der einzelnen in Umfangsrichtung benachbarten Umfangsnutteile 3a, 4a vorliegt. Die Umfangsnuten 3 sind ebenso wie die zentrale Umfangsnut 1 als breite Nuten gestaltet, deren Breite zwischen 6 und 9 mm, insbesondere ca. 8 mm, beträgt. Die Umfangsnuten 4 sind schmäler ausgestaltet als die Umfangsnuten 3, mit einer Mindestbreite von 2 mm und einer maximalen Breite von 5 mm. Die Blöcke 7a der der zentralen Umfangsnut 1 benachbarten Blockreihen 7 sind voneinander durch Einschnitte 8 getrennt. Die Einschnitte 8 besitzen eine Breite von 0,5 bis 1 mm, im dargestellten Ausführungsbeispiel von 0,8 mm. Ihre Tiefe entspricht nicht der vollen Dessintiefe, sondern zwischen 30 und 70 %, insbesondere etwa 50 % der Profiltiefe, die bei PKW-Reifen im allgemeinen 8 mm beträgt.
Die Einschnitte 8 verlaufen in Verlängerung der Quernuten 2, und zwar derart, daß sich jene Blockkanten der Blöcke 6a, 7a der beiden mittleren Blockreihen 6, 7, die die in die Kontaktfläche mit dem Untergrund beim Abrollen des Reifens zuerst einlaufenden Kanten sind, als eine der die Einschnitte 8 begrenzenden Blockkante fortsetzen. Auch der bogenförmig gekrümmte Verlauf der Quernuten 2 wird durch die Einschnitte 8 fortgeführt, sodaß diese an ihren Einmündungsbereichen in die zentrale Umfangsnut 1 einen Winkel β'', der größer als der Winkel β ist, mit der Äquatorlinie A-A einschließen. Durch die mit geringerer Tiefe ausgebildeten Einschnitte 8 werden die einzelnen Blöcke 7a in den der zentralen Umfangsnut 1 benachbarten Blockreihen 7 aneinander gekoppelt.

Wie aus Fig. 1a ersichtlich ist, sind die Umfangsnutteile 4a besonders ausgestaltet. Jeder Umfangsnutteil 4a setzt sich aus 3 Abschnitten 14a, 14b, 14c zusammen, die jeweils etwa über 1/3 der Länge des Umfangsnutteiles 4 verlaufen. Im ersten und im dritten Abschnitt 14a, 14c besitzen die Umfangsnutteile 4a eine verringerte Tiefe, im mittleren Abschnitt 14b sind sie bevorzugt auf volle Dessintiefe gestaltet. Die Bereiche mit der verringerten Tiefe haben hierbei eine Tiefe zwischen 30 und 70 % der Dessintiefe, insbesondere etwa 50 %. Diese Ausgestaltung der Umfangsnutteile 4a bewirkt somit eine gewisse Ankopplung der in Querrichtung benachbarten Blöcke 6a, 7a der beiden mittleren Blockreihen 6, 7. Insgesamt wird hier eine Ausgestaltung getroffen, bei der im Mittelbereich des Laufstreifens einerseits die Stabilität des Laufstreifenprofiles erhöht wird, was sich auf das Fahrverhalten sehr gut auswirkt, da damit ein direktes Ansprechen auf Lenkkräfte gewährleistet ist. Gleichzeitig wird durch die erfindungsgemäße Ausgestaltung der Umfangsnuten 4 das Aquaplaningverhalten des Reifens verbessert, da durch die geschilderte Ausgestaltung weniger Verwirbelungen im Wasserablauf auftreten.

Sowohl die die Umfangsnuten 3, 4 begrenzenden Blockkanten als auch die die zentrale Umfangsnut 1 begrenzenden Blockkanten sind sägezahnartig gezackt ausgebildet, was einerseits das Bremsverhalten auf winterlichen Fahrbahnen, insbesondere auf Schnee oder Eis, als auch Naß- und Schneegriff günstig beeinflußt.

Zusätzlich sind sämtliche Blöcke, was bei Winterreifen üblich ist, mit einer Vielzahl von Feineinschnitten 9, 10, 11 versehen, die in jedem Block zumindest im wesentlichen parallel zueinander verlaufen und zick-zack-förmig gestaltet sind. In den Schulterblockreihen 5 besitzen die Feineinschnitte 9 insgesamt einen Verlauf, der parallel oder im wesentlichen parallel zu den die Quernuten 2 begrenzenden Blockkanten erfolgt, die Feineinschnitte 10 in den in Querrichtung benachbarten Blöcken 6a der einen mittleren Blockreihe 6 besitzen einen Verlauf, der im wesentlichen dem Verlauf der Feineinschnitte 9 in den Schulterblöcken 5a entspricht, sodaß hier keine parallele Anordnung des Verlaufes der Feineinschnitte zu den Blockkanten vorliegt. Die Feineinschnitte 11 in den Blöcken 7a der der zentralen Umfangsnut 1 benachbarten Blockreihen 7 sind in Reifenquerrichtung verlaufend orientiert, beziehungsweise besitzen einen Verlauf, bei dem ihre Erstreckungsrichtung unter einem relativ kleinen spitzen Winkel von +/- 10° von der Reifenquerrichtung abweicht. Insgesamt ist bei diesem Laufstreifenprofil eine Feineinschnittanordnung getroffen, die sich auf das Seitenführungsverhalten des Reifens günstig auswirkt.

Wie dargestellt, können ferner noch zumindest in den Blöcken 5a der Schulterblockreihen 5 Entlüftungsnuten 12 zwischen benachbarten Feineinschnitten 9 angeordnet werden. Anstelle der dargestellten Zick-zack-Form können die Feineinschnitte auch Wellenform besitzen oder zumindest bereichsweise einen geraden Verlauf. Sämtliche Feineinschnitte haben eine Breite von 0,3 bis 0,7 mm, insbesondere von 0,4 mm, und können auch mit sich ändernder Tiefe gestaltet werden. Abweichend von der dargestellten Ausführungsform können die Einschnitte zwischen den Blöcken der der zentralen Umfangsnut benachbarten Blockreihen kürzer gestaltet werden und die Quernuten auch zwischen diese Blöcke hineinverlaufen.

## Patentansprüche

1. Fahrzeugluftreifen, insbesondere für den Einsatz unter winterlichen Fahrbedingungen, mit einem Laufstreifenprofil, welches zumindest eine breite, zentrale, in Umfangsrichtung umlaufende Umfangsnut (1) und weitere Umfangsnuten (3, 4) und Quernuten (2) besitzt, wobei in jeder Laufstreifenhälfte eine der zentralen Umfangsnut benachbarte mittlere Blockreihe (7), eine weitere mittlere Blockreihe (6) und eine Schulterblockreihe (5) angeordnet sind, deren Blöcke (5a, 6a, 7a) jeweils mit einer Vielzahl von Lamellenfeineinschnitten (9, 10, 11) versehen sind, wobei durch den Verlauf der Quernuten in den beiden Laufstreifenhälften das Laufstreifenprofil gepfeilt und laufrichtungsgebunden gestaltet ist, dadurch gekennzeichnet, daß sich die Umfangsnuten (3, 4) aus Umfangsnutteilen (3a, 4a) zusammensetzen, die jeweils unter einem spitzen Winkel (α) von 5 bis 25°, insbesondere von 10 bis 20°, zur Umfangsrichtung geneigt verlaufen und in Reifen querrichtung derart gegeneinander versetzt sind, daß keine fluchtende Andordnung der jeweils in Umfangsrichtung benachbarten Umfangsnutteile (3a, 4a) vorliegt, wobei die Umfangsnutteile (3a, 4a) in der einen Laufstreifenhälfte gegenüber jenen in der anderen Laufstreifenhälfte gegensinnig geneigt sind, und wobei die Umfangsnutteile (4a) zwischen den Blöcken (6a, 7a) der mittleren Blockreihen (6, 7) schmäler ausgeführt sind als die Umfangsnutteile (3a) zwischen den Schulterblockreihen (5) und den diesen benachbarten mittleren Blockreihen (6), und über ihren Verlauf zumindest im wesentlichen konstante Breite besitzen sowie über einen Teil (14a, 14c) ihrer Erstreckung eine geringere Tiefe aufweisen als die volle Dessintiefe.

2. Fahrzeugluftreifen nach Anspruch 1, dadurch gekennzeichnet, daß sich die die Blöcke (6a, 7a) der beiden mittleren Blockreihen (6, 7) voneinander trennenden Umfangsnutteile (4a) aus drei Abschnitten (14a, 14b, 14c) zusammensetzen, die vorzugsweise jeweils über ein Drittel der Länge der Umfangsnutteile (4a) verlaufen, wobei die den Quernuten (2) benachbarten ersten und dritten Abschnitte (14a, 14c) eine geringere Tiefe besitzen als der mittlere Abschnitt (14b).

3. Fahrzeugluftreifen nach Anspruch 2, dadurch gekennzeichnet, daß die seichteren Abschnitte (14a, 14c) der Umfangsnutteile (4a) eine Tiefe besitzen, die 30 bis 60 %, insbesondere ca. 50 %, der Dessintiefe beträgt.

4. Fahrzeugluftreifen nach einem der Ansprüche 1 bis 3, dadurch gekennzeichnet, daß die Blöcke (7a) in den der zentralen Umfangsnut (1) benachbarten mittleren Blockreihen (7) voneinander durch Einschnitte (8), die eine Breite von 0,5 bis 1 mm und zumindest über einen Teil ihrer Länge eine geringere Tiefe als die Dessintiefe besitzen, getrennt sind.

5. Fahrzeugluftreifen nach einem der Ansprüche 1 bis 4, dadurch gekennzeichnet, daß die von den Umfangsnuten (1, 3, 4) begrenzten Blockkanten sägezahnartig gezackt ausgebildet sind.

6. Fahrzeugluftreifen nach einem der Ansprüche 1 bis 5, dadurch gekennzeichnet, daß die Lamellenfeineinschnitte (9, 10, 11) in den Blöcken (5a, 6a, 7a) derart verlaufen, daß sie an den einspringenden Ecken der sägezahnartig ausgestalteten Blockkanten in die Umfangsnuten (1, 3, 4) münden.

7. Fahrzeugluftreifen nach einem der Ansprüche 1 bis 6, dadurch gekennzeichnet, daß die Lamellenfeineinschnitte (11) in den Blöcken (7a) der der zentralen Umfangsnut (1) benachbarten mittleren Blockreihen (7) eine Erstreckungsrichtung besitzen, die zumindest im wesentlichen der Profilquerrichtung entspricht, bzw. unter einem kleinen Winkel von bis zu 10° von dieser abweicht.

8. Fahrzeugluftreifen nach einem der Ansprüche 1 bis 7, dadurch gekennzeichnet, daß sämtliche Feineinschnitte (9, 10, 11) eine Zick-zack- oder Wellenform besitzen.

## Claims

1. Pneumatic vehicle tyre, more especially for use in wintry driving conditions, having a tread strip profile which has at least one broad, central, circumferential groove (1) extending in the circumferential direction and additional circumferential grooves (3, 4) and transverse grooves (2), one middle row of blocks (7) adjacent the central circumferential groove, one additional middle row of blocks (6) and one row of shoulder blocks (5) being disposed in each tread strip half, the blocks (5a, 6a, 7a) of which rows are each provided with a plurality of fine laminar incisions (9, 10, 11), the tread strip profile having an arrow-like configuration because of the configuration of the transverse grooves in the two tread strip halves and being adapted to the direction of travel, characterised in that the circumferential grooves (3, 4) are formed from circumferential groove parts (3a, 4a), which each extend in an inclined manner relative to the circumferential direction at an acute angle (α) of between 5 and 25°, more especially of between 10 and 20°, and are offset from one another, when viewed with respect to the transverse direction of the tyre, so that there is no aligned disposition of the circumferential groove parts (3a, 4a) lying adjacent one another when viewed with respect to the circumferential direction, the circumferential groove parts (3a, 4a) in one tread strip half being inclined in the opposite direction to those in the other tread strip half, and the circumferential groove parts (4a) between the blocks (6a, 7a) of the middle rows of blocks (6, 7) being narrower than the circumferential groove parts (3a) between the rows of shoulder blocks (5) and the middle rows of blocks (6) adjacent said rows, and having an at least substantially constant width over their extent as well as having a smaller depth over one part (14a, 14c) of their length than the full pattern depth.

2. Pneumatic vehicle tyre according to claim 1, characterised in that the circumferential groove parts (4a), which separate the blocks (6a, 7a) of the two middle rows of blocks (6, 7) from each other, comprise three portions (14a, 14b, 14c), which each preferably extend over a third of the length of the circumferential groove parts (4a), the first and third portions (14a, 14c) adjacent the transverse grooves (2) having a smaller depth than the middle portion (14b).

3. Pneumatic vehicle tyre according to claim 2, characterised in that the shallower portions (14a, 14c) of the circumferential groove parts (4a) have a depth amounting to between 30 and 60 %, preferably approx. 50 %, of the pattern depth.

4. Pneumatic vehicle tyre according to one of claims 1 to 3, characterised in that the blocks (7a) in the middle rows of blocks (7) adjacent the central circumferential groove (1) are separated from one another by incisions (8) which have a width of 0.5 to 1 mm, at least over a part of their length, and a smaller depth than the pattern depth.

5. Pneumatic vehicle tyre according to one of claims 1 to 4, characterised in that the block edges defined by the circumferential grooves (1, 3, 4) have a sawtooth-like, jagged configuration.

6. Pneumatic vehicle tyre according to one of claims 1 to 5, characterised in that the fine laminar incisions (9, 10, 11) in the blocks (5a, 6a, 7a) extend so that they terminate in the circumferential grooves (1, 3, 4) at the re-entrant corners of the sawtooth-like block edges.

7. Pneumatic vehicle tyre according to one of claims 1 to 6, characterised in that the fine laminar incisions (11) in the blocks (7a) of the middle row of blocks (7) adjacent the central circumferential groove (1) have a direction of extension which corresponds, at least substantially, to the transverse direction of the profile or, respectively, deviates by a small angle of up to 10° therefrom.

8. Pneumatic vehicle tyre according to one of claims 1 to 7, characterised in that all of the fine incisions (9, 10, 11) have a zigzag-like or undulatory configuration.

## Revendications

1. Bandage pneumatique pour véhicule, notamment destiné à l'utilisation dans des conditions de déplacement hivernales, muni d'un profil de bande de roulement possédant au moins une large rainure périphérique centrale (1) s'étendant dans le sens circonférentiel, des rainures périphériques supplémentaires (3, 4) et des rainures transversales (2), bandage dans lequel, dans chaque moitié de la bande de roulement, se trouvent une rangée centrale (7) de blocs voisine de la rainure périphérique centrale, une autre rangée centrale (6) de blocs et une rangée (5) de blocs d'épaulement, dont les blocs (5a, 6a, 7a) sont respectivement pourvus d'un grand nombre de fines incisions de lamellisation (9, 10, 11), le profil de la bande de roulement présentant une configuration fléchée et tributaire de la direction du roulement, suite à l'allure des rainures transversales dans les deux moitiés de la bande de roulement, caractérisé par le fait que les rainures périphériques (3, 4) se composent de segments (3a, 4a) qui s'étendent respectivement avec inclinaison selon un angle aigu (α) de 5 à 25°, notamment de 10 à 20° par rapport à la direction circonférentielle, et sont décalés les uns des autres dans la direction transversale du pneumatique, de telle sorte qu'il n'existe aucune disposition coïncidente des segments (3a, 4a) de rainures périphériques respectivement voisins dans la direction circonférentielle, les segments (3a, 4a) de rainures périphériques étant inclinés, dans l'une des moitiés de la bande de roulement, en sens inverse de ceux situés dans l'autre moitié de la bande de roulement, et les segments (4a) de rainures périphériques interposés entre les blocs (6a, 7a) des rangées centrales (6, 7) de blocs, étant réalisés plus étroits que les segments (3a) de rainures périphériques interposés entre les rangées (5) de blocs d'épaulement et les rangées centrales (6) de blocs voisines des rangées précitées, et possédant une largeur au moins pour l'essentiel constante sur leur tracé, tout en présentant, sur une partie (14a, 14c) de leur étendue, une profondeur moindre que la profondeur totale du dessin.

2. Bandage pneumatique pour véhicule, selon la revendication 1, caractérisé par le fait que les segments (4a) de rainures périphériques, séparant les uns des autres les blocs (6a, 7a) des deux rangées centrales (6, 7) de blocs, se composent de trois tronçons (14a, 14b, 14c) s'étendant de préférence, à chaque fois, sur un tiers de la longueur desdits segments (4a) de rainures périphériques, les premier et troisième tronçons (14a, 14c), voisins des rainures transversales (2), possédant une plus faible profondeur que le tronçon médian (14b).

3. Bandage pneumatique pour véhicule, selon la revendication 2, caractérisé par le fait que les tronçons moins profonds (14a, 14c) des segments (4a) de rainures périphériques possèdent une profondeur représentant de 30 à 60 %_{,} en particulier environ 50 % de la profondeur du dessin.

4. Bandage pneumatique pour véhicule, selon l'une des revendications 1 à 3, caractérisé par le fait que, dans les rangées centrales (7) de blocs qui sont voisines de la rainure périphérique centrale (1), les blocs (7a) sont séparés les uns des autres par des entailles (8) présentant une largeur de 0,5 à 1 mm et possédant, au moins sur une partie de leur longueur, une profondeur plus faible que la profondeur du dessin.

5. Bandage pneumatique pour véhicule, selon l'une des revendications 1 à 4, caractérisé par le fait que les arêtes des blocs, délimitées par les rainures périphériques (1, 3, 4), sont de réalisation taillée en dents de scie.

6. Bandage pneumatique pour véhicule, selon l'une des revendications 1 à 5, caractérisé par le fait que les fines incisions de lamellisation (9, 10, 11) s'étendent, dans les blocs (5a, 6a, 7a), de telle sorte qu'elles débouchent dans les rainures périphériques (1, 3, 4) sur les angles rentrants des arêtes des blocs configurées en dents de scie.

7. Bandage pneumatique pour véhicule, selon l'une des revendications 1 à 6, caractérisé par le fait que, dans les blocs (7a) des rangées centrales (7) de blocs qui sont voisines de la rainure périphérique centrale (1), les fines incisions de lamellisation (11) possèdent une direction d'étendue correspondant au moins pour l'essentiel à la direction transversale du profil ou s'écartant respectivement, de cette direction, selon un petit angle atteignant jusqu'à 10°.

8. Bandage pneumatique pour véhicule, selon l'une des revendications 1 à 7, caractérisé par le fait que toutes les incisions fines (9, 10, 11) possèdent une forme en zigzag ou une forme ondulée.
